# EUROPÄISCHE PATENTANMELDUNG

(11) **EP 0 538 580 A1**
(43) Veröffentlichungstag der Anmeldung: **28.04.1993**
(21) Anmeldenummer: 92114104.0
(22) Anmeldetag: 19.08.1992
(51) Int. Cl.: C09D 5/00, C09D 7/12, G01N 21/88

(54) **Beschichtung zum Auffinden von Druck- oder Stossstellen an Bauteilen**

(30) Priorität: 22.10.1991 DE 4134816
(71) Anmelder: Deutsche Aerospace AG, D-81663 München (DE); BASF Aktiengesellschaft, D-67063 Ludwigshafen (DE)
(72) Erfinder: Drechsler, Klaus, W-8152 Feldkirchen-Westerham (DE); Siegling, Hans-Friedrich, W-8011 Egmating (DE); Martin, Willi, Dr., W-8069 Reichertshausen (DE); Schuler, Bernhard, Dr., W 6800 Mannheim 24 (DE); Wendel, Dr., W-6700 Ludwigshafen (DE)

(57) **Zusammenfassung**

Eine Beschichtung zum Auffinden von Druck- oder Stoßstellen an Bauteilen, insbesondere an Bauteilen aus Faserverbundwerkstoffen, besteht aus einem abwaschbaren Lack oder Abziehlack, in dem mit Farbstoff gefüllte Mikrokapseln eingemischt sind. Die Mikrokapseln können von unterschiedlicher Belastungsempfindlichkeit (Sensitivität) sein, wobei die unterschiedlichen Mikrokapseln mit verschiedenen Farbstoffen gefüllt sind. Dadurch können verschieden schwere Schädigungen an einem Bauteil durch die unterschiedliche Farbe der Schadensstelle erkannt werden.

## Beschreibung

Die Erfindung bezieht sich auf eine Beschichtung zum Auffinden von Druck- oder Stoßstellen an Bauteilen gemäß dem Oberbegriff des Anspruchs 1.

Eine solche Beschichtung ist aus dem in der DE-PS 40 07 152 beschriebenen Verfahren bekannt. Dort besteht die Beschichtung aus einer drei Wirksubstanzen enthaltenden Basissubstanz, wobei die erste Wirksubstanz der Zünder, die zweite Wirksubstanz der Farbstoff und die dritte Wirksubstanz ein das Reagieren des Farbstoffs begrenzender Inhibitor ist. Dieses bekannte Verfahren ist mit seinen drei Wirkstoffen umständlich in der Herstellung. Es muß gewährleistet sein, daß die einzelnen Wirksubstanzen gleichmäßig in der Beschichtung verteilt sind. Ist dieses nicht der Fall, kann der als Zünder dienende Oxidator nicht die Farbstoffe oxidieren und nicht den durch die Oxidation des Farbstoffes bedingten Farbumschlag bewerkstelligen.

Der Erfindung liegt die Aufgabe zugrunde, eine Beschichtung der eingangs genannten Art einfacher und wirkungsvoller auszubilden.

Diese Aufgabe ist erfindungsgemäß dadurch gelöst, daß die Beschichtung aus einem Lack besteht, in dem mit Farbstoff gefüllte Mikrokapseln eingemischt sind. Ausgestaltungen der Erfindung sind in den Unteransprüchen gekennzeichnet.

Der wesentlliche Vorteil der Erfindung besteht darin, daß in einem bekannten handelsüblichen Lack eine große Anzahl von mit Farbstoff gefüllten Mikrokapseln eingemischt sind. Insbesondere findet die Erfindung ihre Anwendung auf abwaschbare Lacke oder Abziehlacke, die bei Bauteilen aus Faserverbundwerkstoffen vor der Montage oder einer Wartung aufgetragen werden, worauf die Bauteile zwischengelagert werden. Wurde das Bauteil während der Lagerung stoßartig belastet, zeigen die mit Farbstoff gefüllten Mikrokapseln dieses durch eine Farbänderung des Lackes an. Wenn Mikrokapseln mit verschiedener Belastungsempfindlichkeit (Sensitivität) in dem Lack vorhanden sind, wobei die unterschiedlich sensitiven Mikrokapseln verschiedene Farbstoffe enthalten, kann ein direkter Zusammenhang zwischen der Farbänderung und der Schwere des Schadens an dem Bauteil festgestellt werden. Die erfindungsgemäße Beschichtung bewirkt außerdem wie alle Lacke einen gewissen Schutz gegen mechanische Beschädigungen, wie z.B Kratzer und Verschmutzung. Da die Mikrokapseln eine Größenordnung von etwa 1/10 mm haben, kann der damit versehene Lack in üblicher Weise in Tauch-, Spritz- oder Streichverfahren aufgebracht und ggf. vor der Montage einfach wieder entfernt werden. Weitere Vorteile der Beschichtung sind:
- Reduzierung der Herstellungskosten von Bauteilen aus Faserverbundwerkstoffen durch eine Verminderung der Qualitätsprüfungen, weil ohne die erfindungsgemäße Beschichtung an einem Bauteil eventuelle Stoßschäden nicht erkennbar sind und deshalb eine aufwendige Ultraschallprüfung erforderlich ist;
- Verminderung des Risikos eines Strukturversagens von Bauteilen durch von außen nicht sichtbare Schäden;
- einfache Inspizierbarkeit der Bauteile;
- keine Umweltbelastung oder Medienbelastung der Bauteile durch Wasser oder Lösungsmittel beim Aufbringen oder Entfernen von sonst üblichen Indikatoren zur Schadensbestimmung;
- Verhinderung von Verschmutzungen der Bauteile;
- Wegfall einer sonst bei Prüfungen erforderlichen Stromversorgung.

Ausführungsbeispiel für eine erfindungsgemäße Beschichtung und Schadensauswertung:
In einen handelsüblichen wasserlöslichen Kunstharzlack werden leicht sensitive Mikrokapseln mit einem blauen Farbstoff, mittelsensitive Mikrokapseln mit einem gelben Farbstoff und schwersensitive Mikrokapseln mit einem roten Farbstoff eingemischt und gleichmäßig verrührt. Der fertige Lack wird z.B. im Tauchverfahren auf eine Konsole aus Faserverbundwerkstoff aufgetragen. Die Konsole wird nach dem Trocknen des Lackes bis zum Einbau in ein Flugzeug zwischengelagert. Vor der Montage der Konsole kann dann durch einfaches Inspizieren festgestellt werden, ob die Konsole während der Lagerung oder des Transportes beschädigt worden ist. Ist eine Beschädigung vorhanden, so ist leicht der Grad der Beschädigung durch die an der Druck- oder Stoßstelle auftretende Farbe zu erkennen. Ist die Druckstelle blau, kann auf eine unbedeutende Schädigung geschlossen werden. Bei gelber Farbe der Schadensstelle ist eine weitere Untersuchung, z.B. mit Ultraschall erforderlich; die Konsole ist wahrscheinlich nach Reparatur noch brauchbar. Bei roter Schadensstelle ist auf eine starke Schädigung zu schließen, die eine Verwendung ausschließt, womit die Konsole zum Ausschuß wird. Nach dem Inspizieren kann die Beschichtung durch Abwaschen oder Abziehen leicht entfernt werden, wodurch die Konsole für die Montage fertig ist.

## Patentansprüche

1. Beschichtung zum Auffinden von Druck- oder Stoßstellen an Bauteilen, insbesondere an Bauteilen aus Faserverbundwerkstoffen, die nach dem Aufbringen beim Auftreten von Druck- oder Stoßbelastungen ihre Farbe ändert, **dadurch gekennzeichnet,** daß sie aus einem Lack besteht, in dem mit Farbstoff gefüllte Mikrokapseln eingemischt sind.

2. Beschichtung nach Anspruch 1, **dadurch gekennzeichnet,** daß Mikrokapseln mit unterschiedlicher Belastungsempfindlichkeit (Sensitivität) eingemischt sind, wobei die unterschiedlichen Mikrokapseln mit verschiedenen Farbstoffen gefüllt sind.

3. Beschichtung nach den Ansprüchen 1 und 2, **dadurch gekennzeichnet,** daß der Lack nach dem Trocknen abwaschbar ist.

4. Beschichtung nach den Ansprüchen 1 und 2, **dadurch gekennzeichnet,** daß der Lack nach dem Trocknen abziehbar ist.

5. Beschichtung nach den Ansprüchen 1 bis 4, **dadurch gekennzeichnet,** daß in den abwaschbaren Lack oder Abziehlack leicht sensitive Mikrokapseln mit einem ersten Farbstoff zum Erkennen von unbedeutenden Schäden, mittelsensitive Mikrokapseln mit einem zweiten Farbstoff zur Erkennung von mittleren Schäden, wie z.B. Delaminationen, und schwer sensitive Mikrokapseln mit einem dritten Farbstoff zur Erkennung schwerer Schäden eingemischt sind.
